(19) Europäisches Patentamt
European Patent Office
Office européen des brevets

(11) Publication number: 0 090 524 B1

(12) **EUROPEAN PATENT SPECIFICATION**

(45) Date of publication of patent specification: **29.10.86**

(51) Int. Cl.⁴: **C 08 K 5/52,** C 08 L 71/04, C 07 F 9/145

(21) Application number: **83301279.2**

(22) Date of filing: **08.03.83**

# (54) Thermal oxidation stabilizer composed of phosphite derivatives of an alcohol and PPE monomer still bottoms, and PPE compositions containing said phosphites.

(30) Priority: **26.03.82 US 362307**

(43) Date of publication of application: **05.10.83 Bulletin 83/40**

(45) Publication of the grant of the patent: **29.10.86 Bulletin 86/44**

(84) Designated Contracting States: **DE FR GB IT NL**

(56) References cited:
**CH-A- 558 384**
**DE-A-2 944 254**
**DE-B-1 494 117**
**GB-A-2 078 226**
**GB-B-1 146 173**
**US-A-4 002 701**

(73) Proprietor: **GENERAL ELECTRIC COMPANY**
**1 River Road**
**Schenectady New York 12305 (US)**

(72) Inventor: **Axelrod, Robert Jay**
**13 Sussex Place**
**Glenmont New York 12077 (US)**
Inventor: **Shu, Peter Hua-Cheng**
**2922 Old State Road**
**Schenectady New York 12303 (US)**

(74) Representative: **Burnside, Michael et al**
**Michael Burnside & Partners 2 Serjeants' Inn**
**Fleet Street**
**London EC4Y 1HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Methods for methylating the ortho position of a phenol by the vapour phase reaction of a phenol with methanol in the presence of a catalyst are well known in the art. Procedures are described in the patent literature, for instance, US—A—3446856, 3479410, 3873628, 3972828 and 3974229. In general, the procedures involve heating phenolic compounds, methanol and catalyst in a reactor, condensing the vapors issuing from the reactor and separating the desired end product, e.g., 2,6-xylenol, from the other components by distillation.

The reaction provides a means for converting phenol into ortho-cresol, a useful disinfectant and wood preservative, and for converting both phenol and ortho-cresol and 2,6-xylenol, a monomer which can be polymerized to a polyphenylene oxide, a high performance engineering thermoplastic. Methods for producing polyphenylene oxide resins from 2,6-xylenol or other substituted phenols are described in many publications, including US—A—3306874, 3306875, 3257357 and 3257358.

The polyphenylene oxides (also sometimes referred to as polyphenylene ethers) are normally subjected to elevated temperatures during processing, as during extruding or injection molding, which can cause degradation, oxidation or other deterioration of the polymer. It is, therefore, not uncommon to incorporate a thermal oxidative stabilizing compound or compounds into the polymer to prevent or at least retard the tendency toward deterioration. One such stabilizer is diphenyldecylphosphite (DPDP), used alone or together with zinc compounds. Other phosphites are also known to stabilize. Their effectiveness is demonstrated by the decreased yellowness index of molded samples. Thus stabilizers impart color stability.

The discovery has now been made that certain phosphite derivatives of monomer still bottoms from the preparation of polyphenylene ether resins (also referred to throughout this disclosure as "monomer still bottom phosphites," and also "MSBP" for the sake of brevity), are satisfactory substitutes for conventional phosphite thermal stabilizers such as DPDP.

This discovery not only provides a less costly stabilizer, but also enables productive use of the monomer still bottoms generated during manufacture of polyphenylene ether resin.

The invention thus includes, in addition to the novel stabilizer, polyphenylene ether resins and blends into which the stabilizer has been incorporated in effective amount.

In greater detail, the phosphite derivatives which constitute the basis of this invention are derived from monomer still bottoms resultling from the ortho-alkylation of phenolic compounds represented by the formula:

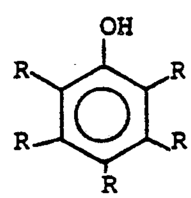

where each R is a monovalent substituent selected from the group consisting of hydrogen, alkyl, e.g., $C_1$—$C_{12}$ alkyl, phenyl and alkyl-substituted phenyl, e.g., $C_1$—$C_{12}$ alkyl-substituted phenyl.

More specifically, ortho-alkylated products of the above compounds are formed by a process which comprises the vapor phase reaction of the compound with an alkyl alcohol, for example, a saturated aliphatic alcohol such as methyl, ethyl, propyl, isopropyl, butyl, isobutyl, tert-butyl, aryl, isoamyl, hexyl, heptyl, octyl, nonyl, decyl, lauryl, cetyl, cyclohexyl, and the like, at a temperature at least 300°C., and preferably between 400 and 500°C. In general, the process conditions are similar to those described in the aforementioned patents, but may differ chiefly in the selection of the catalyst.

Particular mention is made of ortho-alkylating catalysts comprising the calcination residue of a magnesium compound, e.g., basic magnesium carbonate, and a manganese compound, e.g., manganese hydroxide. Such catalysts are made by known procedures, such as by precipitation of manganese hydroxide from aqueous media in the presence of suspended particles of the magnesium compound, followed by drying, shaping and calcining the resultant material at elevated temperatures.

The catalyst can be used alone but is frequently employed together with a shaping aid such as methylcellulose or acrylic polymers or binders such as powdered graphite, as is well known to those skilled in the art.

Although, as explained, the process is broadly applicable to a variety of phenolic compounds and alcohls as the starting materials, of chief interest is the ortho-methylation of phenol and ortho-cresol to form 2,6-xylenol because of the extensive use of this material as a monomer for the synthesis of the corresponding polyphenylene ethers, i.e., poly(2,6-dimethyl-1,4-phenylene ether) resin.

The vapors issuing from the reactor are condensed to yield a condensate containing the desired ortho-alkylated end product which can be in major or minor proportion, one or more alkylation by-products and unreacted phenolics and/or alcohol. The condensate is then distilled to separate and take off the desired ortho-alkylated product, leaving behind a residue (monomer still bottom). With particular reference to the ortho-methylation of phenol/o-cresol, this residue can comprise any one of the following:

(1) MSB from the production run less non-volatiles, i.e., the volatile fraction of MSB. A typical composition is about 85—90% of 2,4,6-trimethylphenol, about 5—10% of 2,4-xylenol and minor amounts of other components such as 2,3,6-trimethylphenol;

(2) A Further fractionation product of (1) formed by distilling off 2,4-xylenol. A typical composition is 95—98% of 2,4,6-trimethylphenol, less than about 2% of 2,4-xylenol and a small amount of 2,3,6-mesitol, or

(3) Substantially pure mesitol.

This residue, or monomer still bottom, is taken and formed into the phosphite derivative stabilizer of the invention by reacting it with a phosphorous halide, e.g., phosphorus dichloride, phosphorus trichloride, phosphorous pentachloride, phosphorous bromide, etc., and an alcohol at an elevated temperature in the range between about 180 to 235°C. The phosphite derivative which results, that is, MSBP, can be of a waxy or liquid nature, depending on the composition of the monomer still bottom from which it is derived.

By way of illustration, MSB and alcohol in an approximate molar ratio of 2:1 are mixed in a suitable vessel. The alcohol can be aromatic, e.g., phenol, or aliphatic, straight or branched chain, preferably having 1 to 10 carbon atoms, e.g., methanol, ethanol, propanol, butanol, pentanol, hexanol, heptanol, octanol, nonanol, decanol, isodocanol, etc. If the MSB is a solid, the mixture is heated to a sufficient temperature to melt the solid, for example, 60—70°C. The phosphorus halide, e.g., liquid $PCl_3$, is then added at the same mole level as the alcohol. This should be done gradually, as, for instance, by means of a funnel. The entire addition will normally take 1—2 hours. The reaction mixture is then heated, with stirring, to a temperature of from 180°C. to 235°C. for about 3—5 hours. Gaseous HCL is evolved during the course of the reaction. The phosphitization can be facilitated by carrying out the reaction in the presence of a catalyst, for example, diphenylphosphite or potassium carbonate, which is added in minor amount, preferably 0.5—5% by weight based on the weight of the phenolics content of the MSB. Preferably, the reaction is conducted under a nitrogen blanket with the pressure controlled to prevent back suction.

After the reaction is completed, the mixture is allowed to cool to room temperature, e.g., 25°C. Any catalyst residue is separated, as by filtration, and the remainder of the reaction mixture is stripped of hydrogen chloride and unreacted phenolics by heating gently under vacuum, preferably at 65—150°C. Care should be taken that the MSBP mixture is not also distilled off.

Gas chromatographic analysis of the resultant MSBP shows the presence of a statistical mixture of phosphites, with trimesitylphosphite predominating in the case of waxy MSBP and with dimesityl pheny phosphite predominant in the case of liquid MSBP. The exact composition of the MSBP will vary, however, depending on the composition of the monomer still bottom from which it is derived and which itself can vary widely in composition.

The monomer still bottom phosphites (MBSP) are effective thermal oxidative and color stabilizers for thermoplastic resins in general and polyphenylene ether resins in particular, preferably those having the formula:

The preferred polyphenylene ethers are homo- and copolymers of the formula:

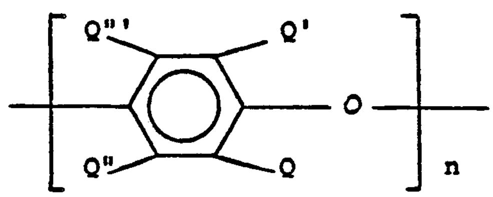

wherein Q, Q′, Q″ and Q‴ are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q′, Q″ and Q‴ in addition may be halogen with the proviso that Q and Q′ are preferably free of a tertiary carbon atom; and n represents the total number of monomer residues and is an integer of at least 50.

These can be prepared by any number of well known procedures, including those described in US—A—3306874, 3306875, 3257357 and 3257358.

As is well known, the polyphenylene ether resins can be employed with a variety of modifying resins. This invention thus also contemplates blends of the described MSBP and polyphenylene ether resins in admixture with supplementary polymeric modifiers such as those described in US—A—3383435 and elsewhere in the patent literature.

Modifying resins include polyalkenyl aromatics such as styrene homopolymers alone or combined as by admixture or copolymerization with elastomeric materials such as polybutadiene rubber or elastomeric styrene copolymers.

The MSBP stabilizers can be incorporated in the blends in any desired manner, and typically by mechanical admixing with the other ingredients. In the case of waxy or semi-solid MSBP, however, it can be somewhat difficult to distribute evenly in the resin blend by dry mixing, extrusion or other compounding

techniques. Preferably, therefore, the waxy or semi-solid MSBP is first dissolved in a liquid additive for the blend, for example, liquid flame retardant agent, then the resultant solution is added to the blend.

The stabilized blends can and often do also contain supplementary non-resinous agents customarily employed with polyphenylene ether resins to improve certain other chemical and/or physical properties. The agents include flame retardants, plasticizers, strengthening fibers, mineral fillers, pigments, dyes, abrasion resistant components, and so forth.

The following examples are set forth only as an illustration of the invention, and are not intended at a limitation on the scope of the invention. Unless stated otherwise, all proportions are stated on a parts by weight basis.

Example 1

This example illustrates the preparation of a phosphite stabilizer derived from a monomer still bottom. A reaction mixture from the manufacture of 2,6-xylenol by ortho-methylation of a mixture of phenol and o-cresol before removal of 2,6-xylenol is found to have the following composition: 10% by weight of 2,6-xylenol, 15% by weight of 2,4-xylenol, 73% by weight of 2,4,6-mesitol, the balance comprising o-cresol, 2,3,6-mesitol, anisole and monomer catalyst residue. The mixture is distilled to remove the 2,6-xylenol. The resultant monomer still bottom is introduced into a three-neck round bottom flask, to which is also added phenol in an amount sufficient to provide a molar ratio to the monomer still bottom of 2.1 to 1, and about 0.5% of potassium carbonate. The mixture is heated, with stirring, to 60—70°C. until the waxy solid is dissolved and a uniform liquid blend of MSB and the phenol is achieved. An amount of liquid $PCl_3$ stoichiometrically equivalent to the amount of alcohol is added gradually over a period of 1—2 hours. The mixture is then heated, with stirring, to a temperature of 200°C. for about 4 hours. The mixture is allowed to cool, then is run through a filter to separate the potassium carbonate catalyst residue. The filtrate, which constitutes the remainder of the reaction mixture, is returned to the flask and distilled under a vacuum equivalent to about 0.2 mm of mercury (26.7 Pa) to remove chlorides and unreacted phenolics (head temperature 67—150°C.). The residue is a waxy solid. GC analysis shows the presence of a mixture of trimesitylphosphite, dimesityl phenyl phosphite, diphenyl mesityl phosphite and triphenyl phosphite.

Example 2

The stabilizing effect of the waxy solid produced in Example 1 is evaluated in a composition comprising 45 parts of poly (2,6-dimethyl-1,4-phenylene ether) resin (PPO, General Electric Co.), 55 parts of rubber modified high impact polystyrene (Foster-Grant's FG 834), 1.5 part of polyethylene, 0.15 part of zinc sulfide, and 0.15 part of zinc oxide.

The compositions are dry blended, extruded and injection molded.

For purposes of comparison, the corresponding comparison is prepared in which none of the stabilizer is present. The results for the injection molded compositions are shown in the Table below.

TABLE 1

Properties of Polyphenylene Ether Composition Containing MSBP or No Phosphite

| Sample No. | 1 | 2 | 3 |
|---|---|---|---|
| MSBP | 0 | 0.5 | 1.0 |
| Yellowness Index (Y.I.) (units) | 63.3 | 61.1 | 61.5 |
| % Change in Y.I. * | 0 | −3.5 | −2.8 |
| Notched Izod Impact Strength at room temp. (J/m) | 218.9 | 224.2 | 226.3 |
| % Change in Impact Strength | 0 | +2.4 | +4.3 |
| HDT at 3.75 Kg/cm² (3.68 bar) (°C) | 124 | 121 | 120.5 |
| Tensile Strength (Kg/cm²) | 587.8 | 620.1 | 624.3 |
| (N/mm²) | 57.64 | 60.81 | 61.22 |
| Tensile Elongation (%) | 60.5 | 55.7 | 58.6 |

* (Change) = |(value with phosphite — value without phosphite)/value without phosphite) × 100%

The phosphite stabilizer of Example 1 is evaluated in a base molding composition comprising 45 parts of PPO, 55 parts of FG 834, 1.5 parts of polyethylene, 0.15 part of zinc sulfide, 0.15 part of zinc oxide and 13 parts of isopropylated triphenyl phosphate liquid flame retardant (FMC's Kronitex—50 — Registered Trade Mark). The composition is prepared by dissolving the MSBP in the amounts noted below in the liquid flame retardant agent (ecept as noted below), then blending all of the ingredients on a Henschel mixer, extruding the blend through a 28 mm twin screw Werner-Pfleiderer extruder at 260°C (vacuum vented to an equivalent of 22.86 cm. of mercury (30477 Pa), cooling and chopping the extrudate and molding at an injection temperature of 232°C (82°C mold temperature). The molded test bars have the following properties.

TABLE 2

| Sample No. | 1 | 2 | 3 | 4* |
|---|---|---|---|---|
| MSBP | 0 | 0.5 | 1.0 | 1.0 |
| Yellowness Index (units) | 66.6 | 56.9 | 56.3 | 59.1 |
| % Change in Y.I. | 0 | −14.6 | −15.5 | −11.3 |
| Notched Izod Imp. Str. at room temp. (J/m) | 213.5 | 256.2 | 266.9 | 240.2 |
| % Change in Imp. Str. | 0 | +20 | +25 | +12.5 |
| HDT at 3.75 Kg/cm (3.68 bar) (°C) | 90.5 | 90 | 80.5 | 98.0 |
| Tensile Strength ($Kg/cm^2$) | 539.3 | 555.4 | 531.5 | 558.2 |
| ($N/mm^2$) | 52.89 | 54.47 | 52.12 | 54.74 |
| Tensile Elongation (%) | 46.2 | 63.6 | 46.0 | 49.4 |

* Prepared without "dissolution" treatment.

Example 4

The MSBP prepared in Example 1 is compared with diphenyl decyl phosphite in a base molding composition comprising 40 parts of PPO, 60 parts of FG 834, 8 parts of Kronitex 50 flame retardant and polyethylene, zinc oxide and zinc sulfide in the same amounts as for the previous examples. Processing conditions are as stated in Example 3. The test results are noted below in Table 3.

TABLE 3

Properties of Polyphenylene Ether Resin Blends Containing MSBP or DPDP

| Sample | 1 | 2 |
|---|---|---|
| Phosphite, (0.5 phr) | MSBP—1 | DPDP |
| Tensile Yield, ($Kg/cm^2$) | 576.5 | 576.5 |
| ($N/mm^2$) | 56.54 | 56.54 |
| Tensile Strength, ($Kg/cm^2$) | 548.4 | 548.4 |
| ($N/mm^2$) | 53.78 | 53.78 |
| Tensile Elongation, (%) | 47 | 54 |
| Notched Izod Impact Strength, at 23°C (J/m) | 245.5 | 245.5 |
| Gardner Impact Strength (m.-Kg)/(Nm) | 1.73/16.97 | 1.56/15.3 |
| HDT at 18.56 $Kg/cm^2$ (18.2 bar) (°C) | 101.1 | 97.7 |
| Channel Flow at 62.78 $kg/cm^2$ (61.57 bar) (cm) | 48.25 | 47.0 |
| Melt Viscosity at 282°C (1500 s-1), poise | 1300 | 1400 |
| (Pa.s) | 130 | 140 |
| UL—94 Flame Resistance | V—1 (7.8 sec) | V—1 (10.3 sec) |
| 45% Gloss | 62 | 62 |
| Yellowness Index | 52.7 | 48.8 |
| Whiteness Index | −33.0 | −31.2 |

Example 5

The MSBP of Example 1 is evaluated versus DPDP in a base molding blend having the composition described in Example 3. The results are set forth in Table 4.

TABLE 4

| Sample No. | 1 | 2 | 3 | 4 | 5 |
|---|---|---|---|---|---|
| Composition DPDP | 0 | 0.5 | 0 | 1 | 0 |
| MSBP—1 | 0 | 0 | 0.5 | 0 | 1 |
| Tensile Str. (Kg/cm$^2$) | 539.3 | 554.0 | 555.4 | 523.1 | 531.5 |
| (N/mm$^2$) | 52.89 | 54.33 | 54.47 | 51.3 | 52.12 |
| Tensile Elong. (%) | 46.2 | 49.7 | 63.6 | 50.9 | 46.0 |
| Tensile Yield (Kg/cm$^2$) | 618.7 | 653.9 | 644.0 | 621.5 | 630.0 |
| (N/mm$^2$) | 60.67 | 64.13 | 63.15 | 60.95 | 61.78 |
| Izod Impact Strength at 23°C (J/m) | 213.5 | 234.9 | 256.2 | 213.5 | 266.9 |
| HDT at 18.56 Kg/cm$^2$ (18.2 bar) (°C) | 90.7 | 90.4 | 90.2 | 89.2 | 89.2 |
| Channel Flow at 7.31 Kg/cm$^2$ (7.17 bar) (cm) | 42.7 | 38.1 | 40.6 | 37.6 | 38.9 |
| 45° Gloss | 29.2 | 26.0 | 20.9 | 27.1 | 28.1 |
| Initial Color, Y.I. | 66.6 | 58.1 | 56.9 | 50.5 | 56.3 |
| Flame Resistance UL—94 (sec) | V—0 (3.7) | V—0 (3.0) | V—0—1 (5.1) | V—1 (5.9) | V—1 (10.7) |

It can be seen from the foregoing results that the blends containing MSBP in accordance with the invention exhibit higher impact strength, greater channel flow distance (indicating better flow), lower heat distortion temperature, comparable color improvement and tensile properties in comparision with DPDP.

Other variations and modifications are possible in light of the above disclosure. For instance, copolymers such as poly(2,6-dimethyl-*co*- 2,3,6-trimethyl-1,4-phenylene ether) can be substituted for poly(2,6-dimethyl-1,4-phenylene ether) resin. Liquid MSBP can be used in place of, or in addition to, waxy or semi-solid MSBP, the specific nature of this material not being critical to successful practice of the invention. Other additive ingredients besides those exemplified can be included in the compositions, such as glass fibers or graphite whiskers for strength enhancement, dyes, pigments, plasticizers, solid flame retardants, and so forth.

**Claims**

1. A thermal oxidative stabilizer composition which comprises an aryl phosphite mixture characterized in that the aryl phosphite mixture is the phosphite derivative of a monomer still bottom from a process for selectively ortho-alkylating a phenolic compound by reacting the phenolic compound with an alcohol in the presence of a catalyst.

2. A stabilizer composition according to claim 1, characterized in that it comprises a mixture of triphenyl phosphite, dimesityl phenyl phosphite and trimesitylphosphite.

3. A stabilizer composition according to any preceding claim, characterized in that the monomer still bottom comprises the distillation residue from the production of 2,6-xylenol by the catalyzed vapor phase reaction of phenol and ortho-cresol with methanol.

4. A stabilizer composition according to any preceding claim, characterized in that it is prepared by reacting said monomer still bottom with a phosphorus halide in the presence of an alcohol at a temperature of 180° to 235°C.

5. A stabilizer composition according to claim 4 characterized in that the phosphorous halide is phosphorous trichloride.

6. A stabilizer composition according to claim 4 or 5 characterized in that the alcohol is an aromatic alcohol or an aliphatic alcohol having from 1 to 10 carbon atoms.

7. A stabilizer composition according to any of claims 4 to 6 characterized in that the monomer still bottoms are reacted with the phosphorous halide in the presence of a catalyst.

8. A stabilizer composition according to claim 7, characterized in that the catalyst is potassium carbonate or diphenylphosphite.

9. A thermoplastic composition comprising a mixture of a polyphenylene ether resin and a stabilizer

characterized in that the stabilizer is a composition according to any of claims 1 to 8.

10. A composition according to claim 9, characterized in that the polyphenylene ether resin is poly (2,6-dimethyl-1,4-phenylene ether).

11. A composition according to claim 9 or 10, characterized in that it includes a modifying resin.

12. A composition according to claim 11, characterized in that the modifying resin is a polyalkenyl aromatic homopolymer or copolymer alone or in admixture with rubber.

13. A composition according to claim 12, characterized in that the polyalkenyl aromatic polymer is polystyrene or rubber modified high impact polystyrene.

14. A composition according to any of claims 9 to 13, characterized in that it also includes a flame retardant agent.

15. A composition according to claim 14, characterized in that the flame retardant agent is isopropylated triphenyl phosphates.

**Patentansprüche**

1. Thermisch oxidative Stabalisatorzusammensetzung, die eine Arylphosphitmischung aufweist, dadurch gekennzeichnet, daß die Arylphosphitmischung das Phosphitderivat eines Destillationsbodenkörper-Monomeren aus dem Verfahren zur selektiven o-Alkylierung einer phenolischen Verbindung durch Umsetzen der phenolischen Verbindung mit einem Alkohol im Anwesenheit eines Katalysators ist.

2. Stabilisatorzusammensetzung nach Anspruch 1, dadurch gekennzeichnet, daß sie eine Mischung von Triphenylphosphit, Dimesitylphenylphosphit und Trimesitylphosphit enthält.

3. Stabilisatorzusammensetzung nach einem der vorstehenden Ansprüche, dadurch gekennzeichnet, daß das Destillationsbodenkörper-Monomere den Destillationsrückstand aus der Produktion von 2,6-Xylenol durch katalysierte Dampfphasenreaktion von Phenol und o-Kresol mit Methanol umfaßt.

4. Stabilisatorzusammensetzung nach einem der vorstehenden Ansprüche, dadurch gekennzeichnet, daß sie durch Umstezung des Destillationsbodenkörper-Monomeren mit einem Phosphorhalogenid in Gegenwart eines Alkohols bei einer Temperatur von 180 bis 235°C hergestellt wird.

5. Stabilisatorzusammensetzung nach Anspruch 4, dadurch gekennzeichnet, daß das Phosphorhalogenid Phosphortrichlorid ist.

6. Stabilisatorzusammensetzung nach Anspruch 4 oder Anspruch 5, dadurch gekennzeichnet, daß der Alkohol ein aromatischer Alkohol oder ein aliphatischer Alkohol mit 1 bis 10 Kohlenstoffatomen ist.

7. Stabilisatorzusammensetzung nach einem der Ansprüche 4 bis 6, dadurch gekennzeichnet, daß das Destillationsbodenkörper-Monomere mit dem Phosphorhalogenid in Gegenwart eines Katalysators umgesetzt wird.

8. Stabilisatorzusammensetzung nach Anspruch 7, dadurch gekennzeichnet, daß der Katalysator Kaliumcarbonat oder Diphenylphosphit ist.

9. Thermoplastische Zusammensetzung, die eine Mischung aus einem Polyphenylenätherharz und einem Stabilisator enthält, dadurch gekennzeichnet, daß der Stabilisator eine Zusammensetzung nach einem der Ansprüche 1 bis 8 ist.

10. Zusammensetzung nach Anspruch 9, dadurch gekennzeichnet, daß das Polyphenylenätherharz Poly(2,6-dimethyl-1,4-phenylenäther) ist.

11. Zusammensetzung nach Anspruch 9 oder 10, dadurch gekennzeichnet, daß sie ein modifizierendes Harz umfaßt.

12. Zusammensetzung nach Anspruch 11, dadurch gekennzeichnet, daß das modifizierende Harz ein polyalkenylaromatisches Homopolymer oder -copolymer allein oder in Mischung mit Gummi ist.

13. Zusammensetzung nach Anspruch 12, dadurch gekennzeichnet, daß das polyalkenylaromatische Polymere Polystyrol oder gummi-modifiziertes hochschlagfestes Polystyrol ist.

14. Zusammensetzung nach einem der Ansprüche 9 bis 13, dadurch gekennzeichnet, daß sie weiterhin ein flammhemmendes Mittel aufweist.

15. Zusammensetzung nach Anspruch 14, dadurch gekennzeichnet, daß das flammhemmende Mittel isopropylierte Triphenylphosphate sind.

**Revendications**

1. Composition de stabilisant envers l'oxydation thermique comprenant un mélange de phosphites d'aryle, caractérisée en ce quele mélange de phosphites d'aryle, est le dérivé phosphites de queues de distillation de monomère issues d'un procédé d'ortho-alkylation sélective d'un composé phénolique par réaction du composé phénolique avec un alcool en présence d'un catalyseur.

2. Composition de stabilisant selon la revendication 1, caractérisée en ce qu'elle comprend un mélange de phosphite de triphényle, de phosphite de dimésityle et de phényle et de phosphite de trimésityle.

3. Composition de stabilisant selon l'une quelconque des revendications précédentes, caractérisée en ce que les queues de distillation de monomère comprennent le résidu de distillation issu de la production de xylénol-2,6 par la réaction, catalysée en phase vapeur, de phénol et d'orthocrésol avec du méthanol.

4. Composition de stabilisant selon l'une quelconque des revendications précédentes, caractérisée en ce qu'on la prépare en faisant réagir les queues de distillation de monomère avec un halogénure phosphoreux en présence d'un alcool à une température de 180° à 235°C.

5. Composition de stabilisant selon la revendication 4, caractérisée en ce que l'halogénure phosphoreux est le trichlorure de phosphore.

6. Composition de stabilisant selon la revendication 4 ou 5, caractérisée en ce que l'alcool est un alcool aromatique ou un alcool aliphatique ayant de 1 à 10 atoms de carbone.

7. Composition de stabilisant selon l'une quelconque des revendications 4 à 6, caractérisée en ce que l'on fait réagir les queues de distillation de monomère avec l'halogénure phosphoreux en présence d'un catalyseur.

8. Composition de stabilisant selon la revendication 7, caractérisée en ce que le catalyseur est constitué par du carbonate de potassium ou du phosphite de diphényle.

9. Composition thermoplastique comprenant un mélange d'une résine de poly(oxyphénylène) et d'un stabilisant, caractérisée en ce que le stabilisant est un composition selon l'une quelconque des revendications 1 à 8.

10. Composition selon la revendication 9, caractérisée en ce que la résine de poly(oxyphénylène) est le poly(oxydiméthyl-2,6 phénylène-1,4).

11. Composition selon la revendication 9 ou 10, caractérisée en ce qu'elle comprend une résine modificatrice.

12. Composition selon la revendication 11, caractérisée en ce que la résine modificatrice est un copolymère ou un homopolymère polyalcényle aromatique, seul ou un mélange avec du caoutchouc.

13. Composition selon la revendication 12, caractérisée en ce que le polymère polyalcényle aromatique est constitué par du polystyrène ou par du polystyrène modifié au caoutchouc de résistance ou choc élevée.

14. Composition selon l'une quelconque des revendications 9 à 13, caractérisée en ce qu'elle comprend aussi un agent ignifugeant.

15. Composition selon la revendication 14, caractérisée en ce que l'agent ignifugeant est constitué par des phosphates de triphényle isopropylés.